# EUROPEAN PATENT SPECIFICATION

(11) **EP 1 353 318 B1**
(45) Date of publication and mention of the grant of the patent: **06.07.2011**
(21) Application number: 02258976.6
(22) Date of filing: 24.12.2002
(51) Int. Cl.: G09G 3/36, G06F 3/147

(54) **Apparatus and method to improve the response speed of an LCD**
Vorrichtung und Methode zur Verbesserung der Ansprechgeschwindigkeit eines LCDs
Dispositif et méthode pour améliorer la vitesse de réponse d'un afficheur à cristaux liquides

(30) Priority: 10.04.2002 KR 2002019478
(43) Date of publication of application: 15.10.2003
(60) Divisional application: 10192372.0
(73) Proprietor: SAMSUNG ELECTRONICS CO., LTD., Suwon-City, Kyungki-do (KR)
(72) Inventor: Lee, Sang-hak, Gangnam-gu, Seoul (KR); Lee, Sang-un, Guseong-myeon, Yongin-si, Gyeonggi-do (KR)
(74) Representative: Robinson, Ian Michael

(56) References cited:
- EP-A- 1 122 711
- JP-A- 2001 092 415
- US-A- 5 976 086
- US-A1- 2002 024 481

## Description

The present invention relates to an apparatus and method to operate a liquid crystal display (LCD), and more particularly, to an apparatus that reduces sensitivity to noise in a digital image signal to improve a response speed of an LCD, and a method therefor.

US-A-2002/024481 mentions an LCD display device of the related art. The appended claims have been characterised based on this document.

As size and weight of personal computers (PCs) and televisions (TVs) reduce continuously, light and compact displays devices have been developed. As a result, flat-panel type displays such as liquid crystal displays (LCDs), have appeared and are replacing the conventional cathode ray tubes (CRTs).

The LCD is a display device that produces a desired image signal by applying an electric field to a liquid material that has anisotropic permittivity and is injected between two substrates. An amount of light transmitted to the two substrates is adjusted by controlling an intensity of the applied electric field.

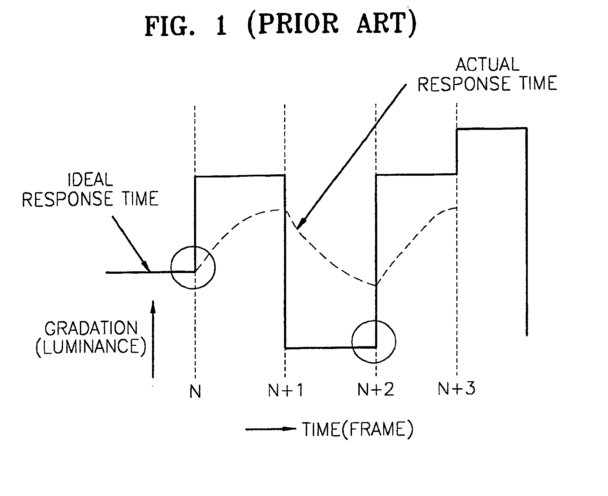

Liquid crystals used in LCDs present a hold-type physical property. In other words, a state of the liquid crystals corresponding to current data is maintained until next data is input. A response speed of the liquid crystals indicates how fast the liquid crystals change according to input data. Most LCD panels have the response speed faster than 1/60 seconds, which corresponds to a speed of one frame per 16.6 ms. Accordingly, as shown in Figure 1, a long period of time corresponding to several frames is necessary between intermediate levels of a general image until the liquid crystal reaches an appropriate voltage in response to the input data. For this reason, ghost, a reduction in a dynamic contract ratio, and blurring edges occur in moving-image display devices such as TVs, digital TVs or DVD players, thereby deteriorating image quality.

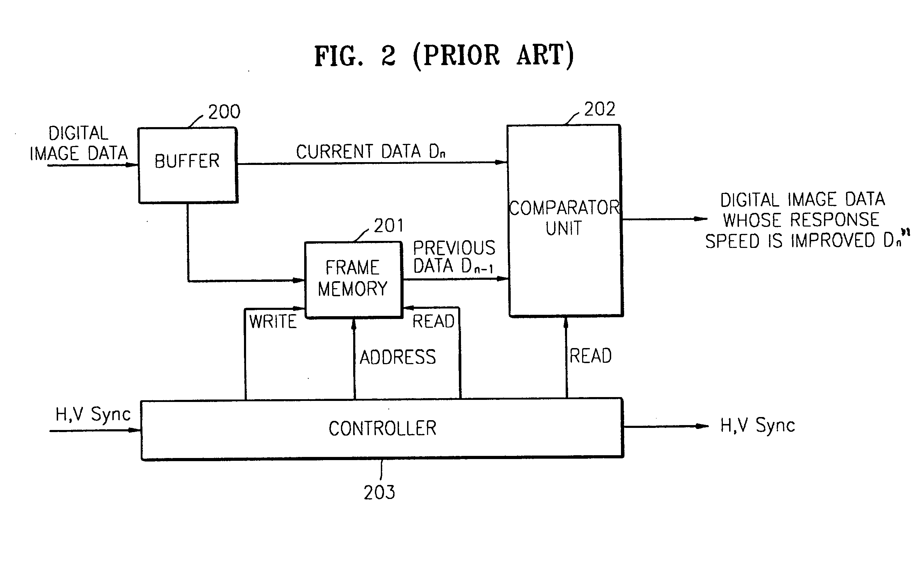

Figure 2 is a block diagram of a conventional apparatus to improve the LCD response speed, which prevents deterioration of the image quality. Input digital image data is temporarily stored in a buffer 200 in conjunction with a frame memory 201. Current image data Dₙ stored in the buffer 200 and previous image data Dₙ₋₁ stored in the frame memory 201 are input to a comparator 202. The comparator 202 compares a gradation of the current image data Dₙ and a gradation of the previous image data Dₙ₋₁ at a same pixel position. If the gradation of the current image data Dₙ and the gradation of the previous image data Dₙ₋₁ are the same, the comparator 202 outputs data Dₙ' that has a response speed of the gradation of the current data Dₙ. If the gradation of the current image data Dₙ is larger than the gradation of the previous image data Dₙ₋₁, the comparator 202 outputs the data Dₙ' that has a gradation larger than that of the current data Dₙ. On the contrary, if the gradation of the current image data Dₙ is smaller than the gradation of the previous image data Dₙ₋₁, the comparator 202 outputs the data Dₙ' that has a gradation smaller than that of the current data Dₙ. A controller 203 controls reading or writing data from or to all blocks.

However, the use of the apparatus to improve the response speed of Figure 2 leads the LCD to be sensitive to every kind of noise. In this case, noise on a screen, which is not serious in the LCD having slow response speed, grows worse after improving the response speed, thereby causing serious deterioration of the image quality.

Various aims and advantages of the invention will be set forth in part in the description that follows and, in part, will be obvious from the description, or may be learned by practice of the invention.

An aim of at least the preferred embodiment of the present invention is to provide an apparatus and method to improve a response speed of an LCD, whilst reducing unwanted sensitivity to noise.

According to the present invention there is provided an apparatus and method as set forth in the appended claims. Preferred features of the invention will be apparent from the dependent claims, and the description which follows.

In one aspect of the present invention there is provided an apparatus to improve a response speed of an LCD, the apparatus including: a noise rejection unit to reject noise in current digital image data and previous digital image data at a same pixel position as in the current digital image data; and a comparator to compare the current digital image data and the previous digital image data of which noises are rejected within a reference value, to change the current digital image data based on a comparison result, and to output a result indicative thereof.

Preferably, the noise rejection unit includes: a first low-pass filter (LPF) to reject a noise in the current digital image data; and a second LPF to reject the noise in the previous digital image data at the same pixel position as in the current digital image data.

The comparator includes a look up table (LUT) to hold gradation data that changes a response speed of the current digital image data.

The comparator accesses the LUT to output the current digital image data when a difference between gradations of the current digital image data and the previous digital image data, of which the noise is rejected, is smaller than the reference value.

The comparator compares the gradation of the current digital image data and the gradation of the previous digital image data, changes the current digital image data and outputs the result, when the difference between the gradations of the current digital image data and the previous digital image data of which the noise is rejected, is larger than the reference value.

The comparator accesses the LUT to increase the gradation of the current digital image data and outputs the result when the difference between the gradations of the current digital image data and the previous digital image data, of which the noise is rejected, is larger than the reference value and the gradation of the current digital image data is larger than the gradation of the previous digital image data. Also, the comparator accesses the LUT to decrease the gradation of the current digital image data and outputs the result when the difference between the gradation of the current digital image data and the previous digital image data, of which the noise is rejected, is larger than the reference value and the gradation of the current digital image data is smaller than the gradation of the previous digital image data.

In a second aspect of the present invention there is provided an apparatus to improve a response speed of an LCD, including: a buffer receiving digital image data and outputting first current image data; a first noise rejection unit rejecting noise in the first current image data and outputting second current image data where noise is rejected; a frame memory storing the first current image data and outputting first previous image data, which precedes the first current image data; a second noise rejection unit outputting second previous image data indicative of noise rejected from the first previous image data; a comparator comparing gradations of the first current image data, the second current image data, the first previous image data, and the second previous image data to output the digital image data having the improved response speed.

Also according to the present invention there is provided a method of improving response speed of an LCD, the method including: rejecting noise in previous digital image data at a same pixel position as current digital image data; comparing a difference between gradations of the current digital image data and the previous digital image data with a reference value and outputting a result indicative thereof; and accessing an LUT storing gradation data that changes a response speed, to change the current digital image data based on the result.

When accessing the LUT, the LUT is accessed to output the current digital image data when the difference between the gradations of the current digital image data and the previous digital image data, of which the noise is rejected, in is smaller than the reference value.

When accessing the LUT, the gradation of the current digital image data is compared with the gradation of the previous digital image data, the gradation of the current digital image data is changed based on the comparison result, and the result is output when the difference between the gradations of the current digital image data and the previous digital image data, of which the noise is rejected, is larger than the reference value.

The LUT is accessed to increase the gradation of the current digital image data and output the result, when the difference between the gradations of the current digital image data and the previous digital image data, of which the noise is rejected, is larger than the reference value and the gradation of the current digital image data is larger than the gradation of the previous digital image data. Also, the LUT is accessed to decrease the gradation of the current digital image data and output the result, when the difference between the gradations of the current digital image data and the previous digital image data, of which the noise is rejected, is larger than the reference value and the gradation of the current digital image data is smaller than the gradation of the previous digital image data.

In accordance with another aspect of the present invention there is provided a method to improve a response speed of an LCD, including: outputting first current image data based on digital image data; rejecting noise in the first current image data and outputting second current image data indicative thereof; outputting first previous image data preceding the first current image data; rejecting noise in the first previous image data and outputting second previous image data indicative thereof; comparing a gradation of the second current image data and a gradation of the second previous image data; and outputting the digital image data having a same response speed as the first current image data when a difference between the gradations of the second current image data and the second previous image data is smaller than a reference value.

In accordance with still another aspect of the present invention, there is provided a method to improve a response speed of an LCD, including: outputting first current image data based on digital image data; rejecting noise in the first current image data and outputting second current image data indicative thereof; outputting first previous image data preceding the first current image data; rejecting noise in the first previous image data and outputting second previous image data indicative thereof; comparing a gradation of the second current image data and a gradation of the second previous image data; and determining whether the gradation of the first current image data is larger than the gradation of the first previous image data when a difference between the gradations of the second current image data and the second previous image data is larger than a reference value.

These together with other aspects and advantages which will be subsequently apparent, reside in the details of construction and operation as more fully hereinafter described and claimed, reference being had to the accompanying drawings forming a part thereof, wherein like numerals refer to like parts throughout.

For a better understanding of the invention, and to show how embodiments of the same may be carried into effect, reference will now be made, by way of example, to the accompanying diagrammatic drawings in which:
Figure 1 is a graph illustrating a characteristic curve of a conventional liquid crystal display (LCD);
Figure 2 is a block diagram of a structure of a conventional apparatus to improve response speed;
Figure 3 is a block diagram of the structure of an apparatus to improve the response speed, according to an embodiment of the present invention;
Figure 4 is a graph illustrating a characteristic curve of the LCD having the improved response speed, according to an embodiment of the present invention; and
Figure 5 is a flow chart illustrating a method to improve the response speed of the LCD, according to an embodiment of the present invention.

Hereinafter, embodiments of the present invention will be described in detail with reference to the attached drawings. The present invention may, however, be embodied in many different forms and should not be construed as being limited to the embodiments set forth herein; rather, these embodiments are provided so that the present disclosure will be thorough and complete, and will fully convey the concept of the invention to those skilled in the art.

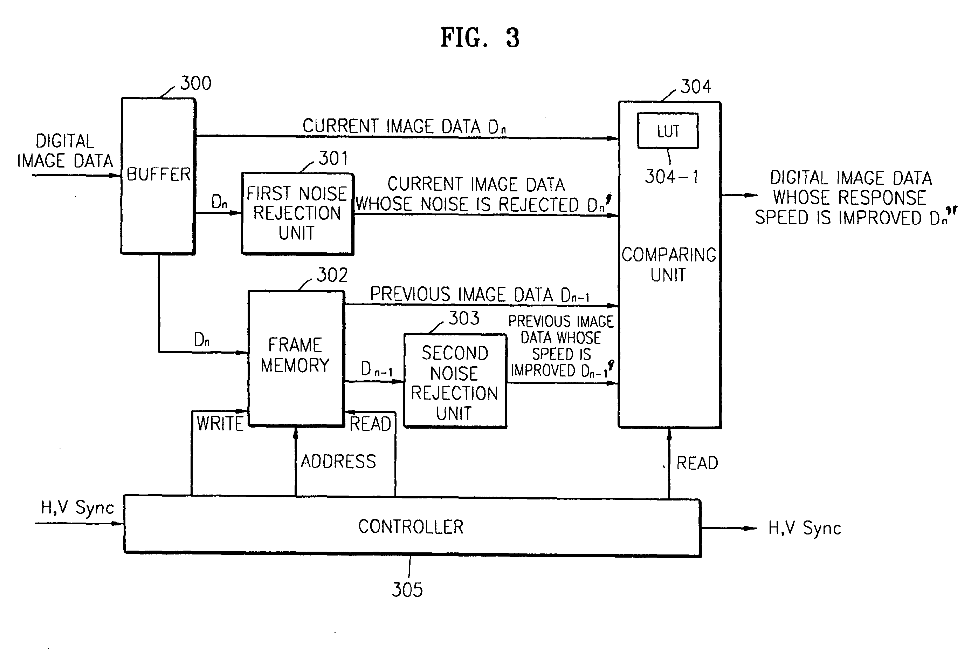

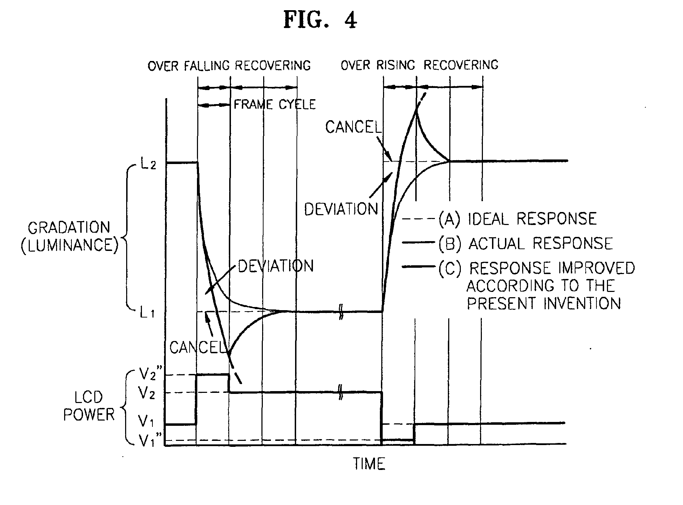

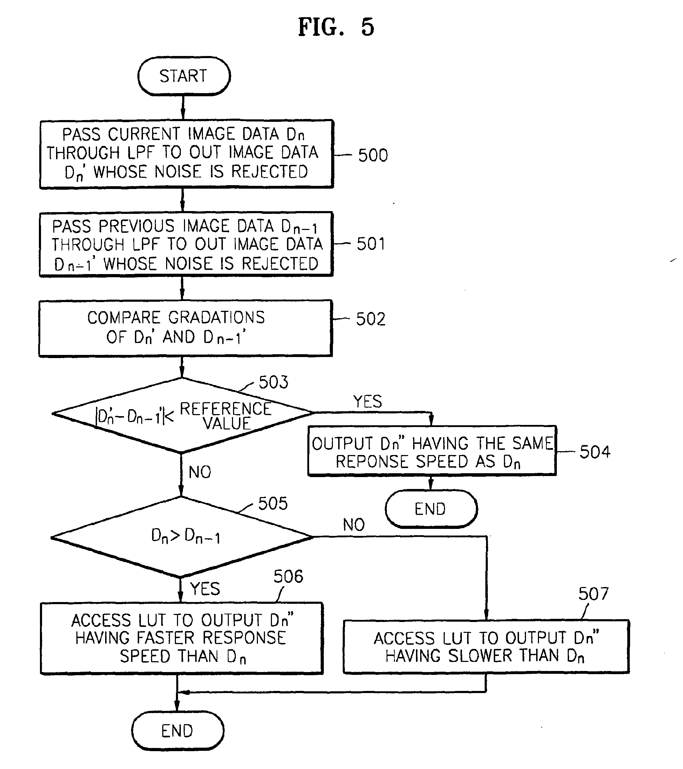

Figure 3 is a block diagram of a structure of an apparatus to improve a response speed of an LCD, according to an embodiment of the present invention. The apparatus includes a buffer 300, a first noise rejection unit 301, a frame memory 302, a second noise rejection unit 303, a comparator 304, a look up table (LUT) 304-1, and a controller 305. Figure 4 is a graph illustrating a characteristic curve of the LCD having the improved response speed. Figure 5 is a flow chart illustrating a method to improve the response speed of the LCD according to an embodiment of the present invention. The method includes, at operation 500, outputting data Dₙ' where noise is rejected by passing current image data Dₙ through a low-pass filter (LPF).

At operation 501, the method outputs data Dₙ₋₁' where the noise is rejected by passing previous image data Dₙ₋₁ through the LPF at a same pixel position of the current image data Dₙ. At operation 502, the method compares the data Dₙ' and the data Dₙ₋₁' where noises are rejected. At operation 503, the method checks whether a difference between gradations of the data Dₙ' and the data Dₙ₋₁' is smaller than a reference value, which is gradation data stored in the LUT 304-1. At operation 504, the method outputs data Dₙ" that has the same response speed as the current data Dₙ and, at2 operation 505, the method checks whether the gradation of the current data Dₙ is larger than the gradation of the data Dₙ₋₁. At operation 506, the method outputs data Dₙ" that has the response speed faster than that of the current image data Dₙ by accessing an LUT. At operation 507, the method outputs data Dₙ" that has the response speed slower than that of the current image data Dₙ by accessing the LUT.

Hereinafter, the apparatus to improve the response speed, according to an embodiment of the present invention, will be described in detail with reference to Figures 3 and 4. Here, the buffer 300 temporarily stores an input digital image data.

The first noise rejection unit 301 includes a low-pass filter (LPF), and rejects the noise contained in the image data Dₙ output from the buffer 300. The first noise rejection unit 301 receives the image data Dₙ and outputs the image data Dₙ'.

The frame memory 302 stores the current image data Dₙ output from the buffer 300 and outputs the previous image data Dₙ₋₁, which precedes the current image data Dₙ, in response to a control signal from the controller 305.

The second noise rejection unit 303 also includes an LPF, and outputs image data Dₙ₋₁' indicative of the noise rejected from the previous image data Dₙ₋₁.

The comparator 304 receives and compares the current image data Dₙ, the current image data Dₙ' that has the noise rejected, the previous image data Dₙ₋₁ having a same pixel position as the current image data Dₙ, and the previous image data Dₙ₋₁' that has the noise rejected. Thereafter, the comparator 304 outputs the current image data Dₙ" having an improved response speed. The comparator 304 includes the LUT 304-1 that holds the gradation data that changes the response speed of the current digital image data and outputs the gradation data that changes the gradation of the current image data Dₙ.

The comparator 304 compares a difference between gradations of the current image data Dₙ' and previous image data Dₙ₋₁' where the noises are rejected with the reference value, and outputs the image data Dₙ" having the same response speed as the current image data Dₙ, when the difference is smaller than the reference value. Here, Dₙ" denotes the same current image data Dₙ.

On the contrary, if the difference is larger than the reference value, the comparator 304 compares the gradation of the current image data Dₙ and the gradation of the previous image data Dₙ₋₁, changes the response speed of the current image data Dₙ, i.e., changes the gradation, and outputs the current image data Dₙ. When the gradation of the current image data Dₙ is larger than that of the previous image data Dₙ₋₁, the comparator 304 accesses the LUT 304-1 and outputs the image data Dₙ" having the response speed faster than the current digital image data Dₙ. Here, Dₙ" denotes the current image data Dₙ having the increased gradation. When the gradation of the current image data Dₙ is smaller than that of the previous image data Dₙ₋₁, the comparator 304 accesses the LUT 304-1 and outputs the image data Dₙ" with the response speed slower than that of the current digital image data Dₙ. Here, Dₙ" denotes the current image data Dₙ with the reduced gradation.

Referring to Figure 4, (a) illustrates an LCD ideal response, (b) illustrates an LCD actual response, and (c) illustrates the LCD response after applying the inventive embodiment. In detail, the response in (c) is obtained by comparing the gradation of the image signal where the noise is rejected with the reference value and the gradation of the image signal is improved based on the compared result. The response in (c) is approximately closer to the LCD ideal response in (a) than the LCD actual response in (b), thereby correcting image distortion.

Figure 5 is a flow chart illustrating the method of improving the response speed. At operation 500, the current image data Dₙ is passed through the LPF 301 to reject noise therein and is output as the Dₙ'.

At operation 501, the previous image data Dₙ₋₁ is passed through the LPF 301, the same pixel position as the current image data Dₙ, so as to cancel the noise in the previous image data Dₙ₋₁ and is output as data Dₙ₋₁'. At operation 502, the comparator 304 compares the gradation of the current image data Dₙ' and the gradation of the previous image data Dₙ₋₁'. At operation 503, the comparator 304 checks if the difference between the gradations of the current image data Dₙ' and previous image data Dₙ₋₁' is smaller than the reference value.

If it is determined at operation 503 that the difference is smaller than the reference value, at operation 504, the image data Dₙ" that has the same response speed as the current image data Dₙ is output. Here, Dₙ denotes the same current image data Dₙ.

If it is determined at operation 503 that the difference is larger than the reference value, at operation 505, the comparator 304 checks whether the gradation of the current image data Dₙ is larger than that of the previous image data Dₙ₋₁.

When the difference between the gradations of the current image data Dₙ' where the noise is rejected and the previous image data Dₙ₋₁' where the noise is rejected is larger than the reference value and the gradation of the current image data Dₙ is larger than the previous image data Dₙ₋₁, at operation 506, the LUT 304-1 is accessed to output image data Dₙ" that has a larger response speed than the current image data Dₙ. Here, Dₙ" denotes the current image data where gradation is increased.

When the gradation difference is larger than the reference value and the gradation of the current image data Dₙ' is smaller than the gradation of the previous image data Dₙ₋₁', at operation 507, the LUT 304-1 is accessed to output the image data Dₙ" of which the response speed is slower than the current image data Dₙ. Here, Dₙ" denotes the current image data Dₙ having the reduced gradation.

As described above, according to the present invention, image distortion due to noise, which is a problem in existing methods to improve a response speed, can be solved. Further, the response speed of an LCD is improved, thereby reducing an occurrence of ghost and blurring edges to a desired level.

The various features and advantages of the invention are apparent from the detailed specification and, thus, it is intended by the appended claims to cover such features and advantages of the invention that fall within the true scope of the invention. Further, since numerous modifications and changes will readily occur to those skilled in the art, it is not desired to limit the invention to the exact construction and operation illustrated and described, and accordingly all suitable modifications and equivalents may be resorted to, falling within the scope of the invention.

## Claims

1. An apparatus to improve a response speed of an LCD, the apparatus comprising:
a comparator (304) to compare current digital image data (Dn) and previous digital image data (Dn-1), to change the current digital image data based on a comparison result, and to output digital image data (Dn") indicative thereof;
wherein
a first noise rejection unit (301) is arranged to reject noise in the current digital image data (Dn) and a second noise rejection unit (303) is arranged to reject noise in the previous digital image data (Dn-1) at a same pixel position as in the current digital image data (Dn);
wherein the digital image data (Dn") output by the comparator (304) comprises the current digital image data (Dn) when the difference between gradations of the current digital image data (Dn') from which noise is rejected and the previous digital image data (Dn-1') from which the noise is rejected, is smaller than a reference value,
and
wherein the digital image data (Dn") output by the comparator (304) comprises the current digital image data (Dn) which has been changed, when the difference between the gradations of the current digital image data (Dn') from which noise is rejected and the previous digital image data (Dn-1') from which the noise is rejected, is larger than the reference value.

2. The apparatus of claim 1, wherein the noise rejection unit (301,302) comprises:
a first low-pass filter (LPF) (301) to reject noise from the current digital image data; and
a second LPF (302) to reject noise from the previous digital image data at the same pixel position as in the current digital image data.

3. The apparatus of claim 1 or 2, wherein the comparator (304) comprises a look up table (LUT) to hold gradation data that changes a response speed of the current digital image data.

4. The apparatus of claim 3, wherein the comparator (304) is arranged to access the LUT and to increase the gradation of the current digital image data and to output the result when the difference between the gradations of the current digital image data (Dn') from which noise is rejected and the previous digital image data (Dn-1') from which the noise is rejected, is larger than the reference value and the gradation of the current digital image data (Dn) is larger than the gradation of the previous digital image data (Dn-1).

5. The apparatus of claim 4, wherein the comparator (304) is arranged to access the LUT and to decrease the gradation of the current digital image data and to output the result when the difference beetween the gradation of the current digital image data (Dn') from which noise is rejected and the previous digital image data (Dn-1') from which the noise is rejected, is larger than the reference value and the gradation of the current digital image data (Dn) is smaller than the gradation of the previous digital image data (Dn-1).

6. The apparatus of any preceding claim, comprising:
a buffer (300) arranged to receive digital image data and to output first current image data (Dn);
a first noise rejection unit (301) arranged to reject noise from the first current image data (Dn) and to output second current image data (Dn') from which noise is rejected;
a frame memory (302) arranged to store the first current image data (Dn) and to output first previous image data (Dn-1), which precedes the first current image data (Dn); and
a second noise rejection unit (303) arranged to output a second previous image data (Dn-1') from which noise is rejected from the first previous image data (Dn-1);
wherein the comparator (304) is arranged to compare gradations of the second current image data (Dn') and the second previous image data (Dn-1') with a threshold, and to change the first current image data (Dn) based on the comparison result and to output the digital image data having improved response speed.

7. A method of improving response speed of an LCD, the method comprising:
comparing a difference between gradations of a current digital image data (Dn) and a previous digital image data (Dn-1) and outputting digital image data (Dn") indicative thereof; and
accessing an LUT (304-1) storing gradation data that changes a response speed, to change the current digital image data (Dn) based on the result;
wherein the step of comparing a difference between gradations of a current digital image data (Dn) and a previous digital image data (Dn-1) comprises the subsequent steps of:
inputting to the comparing unit current digital image data (Dn') from which noise is rejected based on a first noise rejection operation and previous digital image data (Dn-1') from which noise is rejected based on a second noise rejection operation to reject noise in the previous digital image data (Dn-1) at a same pixel position as in the current digital image data (Dn);
outputting digital image data (Dn") comprising the current digital image data (Dn) when the difference between gradations of the current digital image data (Dn') from which noise is rejected and the previous digital image data (Dn-1') from which noise is rejected, is smaller than a reference value; and
outputting digital image data (Dn") comprising current digital image data which has been changed when the difference between the gradations of the current digital image data (Dn') from which noise is rejected and the previous digital image data (Dn-1') from which noise is rejected, is larger than the reference value. gradation of the current digital image data (Dn) is larger than the gradation of the previous digital image data (Dn-1).

8. The method of claim 7, wherein the LUT is accessed to increase the gradation of the current digital image data and to output the result, when the difference, between the gradations of the current digital image data (Dn') from which noise is rejected and the previous digital image data (Dn-1') from which the noise is rejected, is larger than the reference value and the gradation of the current digital image data (Dn) is larger than the gradation of the previous digital image data (Dn-1).

9. The method of claim 7 or 8, wherein the LUT is accessed to decrease the gradation of the current digital image data (Dn) and to output the result, when the difference between the gradations of the current digital image data (Dn') from which noise is rejected and the previous digital image data (Dn-1') from which noise is rejected, is larger than the reference value and the gradation of the current digital image data (Dn) is smaller than the gradation of the previous digital image data (Dn-1).

10. The method of claim 7, 8 or 9, comprising:
outputting first current image data (Dn) based on digital image data;
rejecting noise in the first current image data (Dn) in a first noise rejection operation and outputting second current image data (Dn') indicative thereof;
outputting first previous image data (Dn-1) preceding the first current image data (Dn);
rejecting noise in the first previous image data (Dn-1) in a second noise rejection operation and outputting second previous image data (Dn-1') indicative thereof;
comparing a gradation of the second current image data (Dn') and a gradation of the second previous image data (Dn-1') ; and
outputting the digital image data (Dn") having a same response speed as the first current image data (Dn) when a difference between the gradations of the second current image data (Dn') and the second previous image data (Dn-1') is smaller than a reference value; and
determining whether the gradation of the first current image data (Dn) is larger than the gradation of the first previous image data (Dn-1) when a difference between the gradations of the second current image data (Dn') and the second previous image data (Dn-1') is larger than a reference value.

11. The method of claim 10, further comprising:
outputting the digital image data (Dn") having the response speed faster than the first current digital image data (Dn) when the gradation of the first current image data (Dn) is larger than the gradation of the first previous image data (Dn-1).

12. The method of claim 10 or 11, further comprising:
outputting the digital image data (Dn") having a response speed slower than that of the first current digital image data when the gradation of the first current image data (Dn) is smaller than the gradation of the first previous image data (Dn-1).

## Patentansprüche

1. Vorrichtung zur Verbesserung einer Ansprechgeschwindigkeit eines LCD, wobei die Vorrichtung Folgendes umfasst:
einen Komparator (304) zum Vergleichen von aktuellen digitalen Bilddaten (Dn) und vorherigen digitalen Bilddaten (Dn-1), um die aktuellen digitalen Bilddaten auf der Basis eines Vergleichsergebnisses zu ändern und digitale Bilddaten (Dn") auszugeben, die diese angeben;
wobei
eine erste Rauschunterdrückungseinheit (301) dafür ausgelegt ist, Rauschen in den aktuellen digitalen Bilddaten (Dn) zu unterdrücken, und eine zweite Rauschunterdrückungseinheit (303) dafür ausgelegt ist, Rauschen in den vorherigen digitalen Bilddaten (Dn-1) an einer selben Pixelposition wie in den aktuellen digitalen Bilddaten (Dn) zu unterdrücken;
wobei die durch den Komparator (304) ausgegebenen digitalen Bilddaten (Dn") die aktuellen digitalen Bilddaten (Dn) umfassen, wenn die Differenz zwischen Gradationen der aktuellen digitalen Bilddaten (Dn'), aus denen Rauschen unterdrückt wird, und der vorherigen digitalen Bilddaten (Dn-1'), aus denen das Rauschen unterdrückt wird, kleiner als ein Referenzwert ist, und
wobei die durch den Komparator (304) ausgegebenen digitalen Bilddaten (Dn") die aktuellen digitalen Bilddaten (Dn), die geändert wurden, umfassen, wenn die Differenz zwischen den Gradationen der aktuellen digitalen Bilddaten (Dn'), aus denen Rauschen unterdrückt wird, und der vorherigen digitalen Bilddaten (Dn-1'), aus denen das Rauschen unterdrückt wird, größer als der Referenzwert ist.

2. Vorrichtung nach Anspruch 1, wobei die Rauschunterdrückungseinheit (301, 303) Folgendes umfasst:
ein erstes Tiefpassfilter bzw. LPF (301) zum Unterdrücken von Rauschen aus den aktuellen digitalen Bilddaten; und
ein zweites LPF (302) zum Unterdrücken von Rauschen aus den vorherigen digitalen Bilddaten an derselben Pixelposition wie in den aktuellen digitalen Bilddaten.

3. Vorrichtung nach Anspruch 1 oder 2, wobei der Komparator (304) eine Nachschlagetabelle bzw. LUT zum Halten von Gradationsdaten umfasst, die eine Ansprechgeschwindigkeit der aktuellen digitalen Bilddaten ändert.

4. Vorrichtung nach Anspruch 3, wobei der Komparator (304) dafür ausgelegt ist, auf die LUT zuzugreifen und die Gradation der aktuellen digitalen Bilddaten zu vergrößern und das Ergebnis auszugeben, wenn die Differenz zwischen den Gradationen der aktuellen digitalen Bilddaten (Dn'), aus denen Rauschen unterdrückt wird, und der vorherigen digitalen Bilddaten (Dn-1'), aus denen das Rauschen unterdrückt wird, größer als der Referenzwert ist und die Gradation der aktuellen digitalen Bilddaten (Dn) größer als die Gradation der vorherigen digitalen Bilddaten (Dn-1) ist.

5. Vorrichtung nach Anspruch 4, wobei der Komparator (304) dafür ausgelegt ist, auf die LUT zuzugreifen und die Gradation der aktuellen digitalen Bilddaten zu verkleinern und das Ergebnis auszugeben, wenn die Differenz zwischen der Gradation der aktuellen digitalen Bilddaten (Dn'), aus denen Rauschen unterdrückt wird, und der vorherigen digitalen Bilddaten (Dn-1'), aus denen das Rauschen unterdrückt wird, größer als der Referenzwert ist und die Gradation der aktuellen digitalen Bilddaten (Dn) kleiner als die Gradation der vorherigen digitalen Bilddaten (Dn-1) ist.

6. Vorrichtung nach einem der vohergehenden Ansprüche, umfassend:
einen Puffer (300), der dafür ausgelegt ist, digitale Bilddaten zu empfangen und erste aktuelle Bilddaten (Dn) auszugeben;
eine erste Rauschunterdrückungseinheit (301), die dafür ausgelegt ist, Rauschen aus den ersten aktuellen Bilddaten (Dn) zu unterdrücken und zweite aktuelle Bilddaten (Dn') auszugeben, aus denen Rauschen unterdrückt ist;
einen Einzelbildspeicher (302), der dafür ausgelegt ist, die ersten aktuellen Bilddaten (Dn) zu speichern und erste vorherige Bilddaten (Dn-1) auszugeben, die den ersten aktuellen Bilddaten (Dn) vorausgehen; und
eine zweite Rauschunterdrückungseinheit (303), die dafür ausgelegt ist, zweite vorherige Bilddaten (Dn-1') auszugeben, aus denen Rauschen aus den ersten vorherigen Bilddaten (Dn-1) unterdrückt wird;
wobei der Komparator (304) dafür ausgelegt ist, Gradationen der zweiten aktuellen Bilddaten (Dn') und der zweiten vorherigen Bilddaten (Dn-1') mit einer Schwelle zu vergleichen und die ersten aktuellen Bilddaten (Dn) auf der Basis des Vergleichsergebnisses zu ändern und die digitalen Bilddaten, die verbesserte Ansprechgeschwindigkeit aufweisen, auszugeben.

7. Verfahren zum Verbessern der Ansprechgeschwindigkeit eines LCD, mit den folgenden Schritten:
Vergleichen einer Differenz zwischen Gradationen aktueller digitaler Bilddaten (Dn) und vorheriger digitaler Bilddaten (Dn-1) und Ausgeben von digitalen Bilddaten (Dn"), die diese angeben; und
Zugreifen auf eine LUT (304-1), die Gradationsdaten speichert, die eine Ansprechgeschwindigkeit ändert, um die aktuellen digitalen Bilddaten (Dn) auf der Basis des Ergebnisses zu ändern;
wobei der Schritt des Vergleichens einer Differenz zwischen Gradationen aktueller digitaler Bilddaten (Dn) und vorheriger digitaler Bilddaten (Dn-1) die folgenden danach kommenden Schritte umfasst:
Eingeben von aktuellen digitalen Bilddaten (Dn'), aus denen Rauschen auf der Basis einer ersten Rauschunterdrückungsoperation unterdrückt wird, und von vorherigen digitalen Bilddaten (Dn-1'), aus denen Rauschen auf der Basis einer zweiten Rauschunterdrückungsoperation unterdrückt wird, in die Vergleichseinheit, um Rauschen in den vorherigen digitalen Bilddaten (Dn-1) an einer selben Pixelposition wie in den aktuellen digitalen Bilddaten (Dn) zu unterdrücken;
Ausgeben von digitalen Bilddaten (Dn"), die die aktuellen digitalen Bilddaten (Dn) umfassen, wenn die Differenz zwischen Gradationen der aktuellen digitalen Bilddaten (Dn'), aus denen Rauschen unterdrückt wird, und der vorherigen digitalen Bilddaten (Dn-1'), aus denen Rauschen unterdrückt wird, kleiner als ein Referenzwert ist; und
Ausgeben von digitalen Bilddaten (Dn"), die aktuelle digitale Bilddaten umfassen, die geändert wurden, wenn die Differenz zwischen den Gradationen der aktuellen digitalen Bilddaten (Dn'), aus denen Rauschen unterdrückt wird, und der vorherigen digitalen Bilddaten (Dn-1'), aus denen Rauschen unterdrückt wird, größer als der Referenzwert ist.

8. Verfahren nach Anspruch 7, wobei auf die LUT zugegriffen wird, um die Gradation der aktuellen digitalen Bilddaten zu vergrößern und das Ergebnis auszugeben, wenn die Differenz zwischen den Gradationen der aktuellen digitalen Bilddaten (Dn'), aus denen Rauschen unterdrückt wird, und der vorherigen digitalen Bilddaten (Dn-1'), aus denen das Rauschen unterdrückt wird, größer als der Referenzwert ist und die Gradation der aktuellen digitalen Bilddaten (Dn) größer als die Gradation der vorherigen digitalen Bilddaten (Dn-1) ist.

9. Verfahren nach Anspruch 7 oder 8, wobei auf die LUT zugegriffen wird, um die Gradation der aktuellen digitalen Bilddaten (Dn) zu verkleinern und das Ergebnis auszugeben, wenn die Differenz zwischen den Gradationen der aktuellen digitalen Bilddaten (Dn'), aus denen Rauschen unterdrückt wird, und der vorherigen digitalen Bilddaten (Dn-1'), aus denen Rauschen unterdrückt wird, größer als der Referenzwert ist und die Gradation der aktuellen digitalen Bilddaten (Dn) kleiner als die Gradation der vorherigen digitalen Bilddaten (Dn-1) ist.

10. Verfahren nach Anspruch 7, 8 oder 9, mit den folgenden Schritten:
Ausgeben von ersten aktuellen Bilddaten (Dn) auf der Basis digitaler Bilddaten;
Unterdrücken von Rauschen in den ersten aktuellen Bilddaten (Dn) in einer ersten Rauschunterdrückungsoperation und Ausgeben von zweiten aktuellen Bilddaten (Dn'), die diese anzeigen;
Ausgeben von ersten vorherigen Bilddaten (Dn-1), die den ersten aktuellen Bilddaten (Dn) vorausgehen;
Unterdrücken von Rauschen in den ersten vorherigen Bilddaten (Dn-1) in einer zweiten Rauschunterdrückungsoperation und Ausgeben von zweiten vorherigen Bilddaten (Dn-1'), die diese anzeigen;
Vergleichen einer Gradation der zweiten aktuellen Bilddaten (Dn') und einer Gradation der zweiten vorherigen Bilddaten (Dn-1'); und
Ausgeben der digitalen Bilddaten (Dn"), die eine selbe Ansprechgeschwindigkeit wie die ersten aktuellen Bilddaten (Dn) aufweisen, wenn eine Differenz zwischen den Gradationen der zweiten aktuellen Bilddaten (Dn') und der zweiten vorherigen Bilddaten (Dn-1') kleiner als ein Referenzwert ist; und
Bestimmen, ob die Gradation der ersten aktuellen Bilddaten (Dn) größer als die Gradation der ersten vorherigen Bilddaten (Dn-1) ist, wenn eine Differenz zwischen den Gradationen der zweiten aktuellen Bilddaten (Dn') und der zweiten vorherigen Bilddaten (Dn-1') größer als ein Referenzwert ist.

11. Verfahren nach Anspruch 10, ferner mit dem folgenden Schritt:
Ausgeben der digitalen Bilddaten (Dn"), die die Ansprechgeschwindigkeit aufweisen, die schneller als die ersten aktuellen digitalen Bilddaten (Dn) ist, wenn die Gradation der ersten aktuellen Bilddaten (Dn) größer als die Gradation der ersten vorherigen Bilddaten (Dn-1) ist.

12. Verfahren nach Anspruch 10 oder 11, ferner mit dem folgenden Schritt:
Ausgeben der digitalen Bilddaten (Dn"), die eine Ansprechgeschwindigkeit aufweisen, die langsamer als die der ersten aktuellen digitalen Bilddaten ist, wenn die Gradation der ersten aktuellen Bilddaten (Dn) kleiner als die Gradation der ersten vorherigen Bilddaten (Dn-1) ist.

## Revendications

1. Appareil pour améliorer la vitesse de réponse d'un afficheur à cristaux liquides, l'appareil comprenant :
un comparateur (304) pour comparer des données d'images numériques courantes (Dn) et des données d'images numériques précédentes (Dn-1), afin de modifier les données d'images numériques courantes sur la base d'un résultat de comparaison, et pour délivrer des données d'images numériques (Dn") représentatives de celles-ci ; dans lequel
une première unité d'élimination du bruit (301) est conçue pour éliminer un bruit présent dans les données d'images numériques courantes (Dn) et une seconde unité d'élimination du bruit (303) est conçue pour éliminer un bruit présent dans les données d'images numériques précédentes (Dn-1) à une même position de pixel que dans les données d'images numériques courantes (Dn) ;
dans lequel les données d'images numériques (Dn") délivrées par le comparateur (304) comprennent les données d'images numériques courantes (Dn) lorsque la différence entre les gradations des données d'images numériques courantes (Dn') desquelles le bruit est éliminé et les données d'images numériques précédentes (Dn-1') desquelles le bruit est éliminé est inférieure à une valeur de référence, et
dans lequel les données d'images numériques (Dn") délivrées par le comparateur (304) comprennent les données d'images numériques courantes (Dn) qui ont été modifiées lorsque la différence entre les gradations des données d'images numériques courantes (Dn') desquelles le bruit est éliminé et les données d'images numériques précédentes (Dn-1') desquelles le bruit est éliminé est supérieure à la valeur de référence.

2. Appareil selon la revendication 1, dans lequel l'unité d'élimination du bruit (301, 303) comprend :
un premier filtre passe-bas (LPF) (301) destiné à éliminer le bruit des données d'images numériques courantes ; et
un second LPF (302) destiné à éliminer le bruit des données d'images numériques précédentes à la même position de pixel que dans les données d'images numériques courantes.

3. Appareil selon la revendication 1 ou 2, dans lequel le comparateur (304) comprend une table de consultation (LUT) destinée à contenir des données de gradation qui modifient une vitesse de réponse des données d'images numériques courantes.

4. Appareil selon la revendication 3, dans lequel le comparateur (304) est conçu pour accéder à la LUT, pour augmenter la gradation des données d'images numériques courantes et pour délivrer le résultat lorsque la différence entre les gradations des données d'images numériques courantes (Dn') desquelles le bruit est éliminé et les données d'images numériques précédentes (Dn-1') desquelles le bruit est éliminé est supérieure à la valeur de référence et lorsque la gradation des données d'images numériques courantes (Dn) est supérieure à la gradation des données d'images numériques précédentes (Dn-1).

5. Appareil selon la revendication 4, dans lequel le comparateur (304) est conçu pour accéder à la LUT, pour réduire la gradation des données d'images numériques courantes et pour délivrer le résultat lorsque la différence entre la gradation des données d'images numériques courantes (Dn') desquelles le bruit est éliminé et les données d'images numériques précédentes (Dn-1') desquelles le bruit est éliminé est supérieure à la valeur de référence et lorsque la gradation des données d'images numériques courantes (Dn) est inférieure à la gradation des données d'images numériques précédentes (Dn-1).

6. Appareil selon l'une quelconque des revendications précédentes, comprenant :
un tampon (300) conçu pour recevoir des données d'images numériques et pour délivrer des premières données d'images courantes (Dn) ;
une première unité d'élimination du bruit (301) conçue pour éliminer le bruit des premières données d'images courantes (Dn) et pour délivrer des secondes données d'images courantes (Dn') desquelles le bruit est éliminé ;
une mémoire de trames (302) conçue pour stocker les premières données d'images courantes (Dn) et pour délivrer des premières données d'images précédentes (Dn-1) qui précèdent les premières données d'images courantes (Dn) ; et
une seconde unité d'élimination du bruit (303) conçue pour délivrer des secondes données d'images précédentes (Dn-1') desquelles le bruit est éliminé des premières données d'images précédentes (Dn-1) ;
dans lequel le comparateur (304) est conçu pour comparer des gradations des secondes données d'images courantes (Dn') et des secondes données d'images précédentes (Dn-1') à un seuil, pour modifier les premières données d'images courantes (Dn) sur la base du résultat de la comparaison et pour délivrer les données d'images numériques ayant une vitesse de réponse améliorée.

7. Procédé d'amélioration de la vitesse de réponse d'un afficheur à cristaux liquides, le procédé consistant à :
comparer une différence entre des gradations de données d'images numériques courantes (Dn) et de données d'images numériques précédentes (Dn-1) et délivrer des données d'images numériques (Dn") représentatives de celles-ci ; et
accéder à une LUT (304-1) stockant des données de gradation qui modifient une vitesse de réponse, afin de modifier les données d'images numériques courantes (Dn) sur la base du résultat ;
dans lequel l'étape de comparaison d'une différence entre des gradations de données d'images numériques courantes (Dn) et de données d'images numériques précédentes (Dn-1) comprend les étapes suivantes consistant à :
fournir en entrée à l'unité de comparaison des données d'images numériques courantes (Dn') desquelles le bruit est éliminé sur la base d'une première opération d'élimination du bruit et des données d'images numériques précédentes (Dn-1') desquelles le bruit est éliminé sur la base d'une seconde opération d'élimination du bruit afin d'éliminer le bruit présent dans les données d'images numériques précédentes (Dn-1) à une même position de pixel que dans les données d'images numériques courantes (Dn) ;
délivrer des données d'images numériques (Dn") comprenant les données d'images numériques courantes (Dn) lorsque la différence entre des gradations des données d'images numériques courantes (Dn') desquelles le bruit est éliminé et les données d'images numériques précédentes (Dn-1') desquelles le bruit est éliminé est inférieure à une valeur de référence ; et
délivrer des données d'images numériques (Dn") comprenant des données d'images numériques courantes qui ont été modifiées lorsque la différence entre les gradations des données d'images numériques courantes (Dn') desquelles le bruit est éliminé et les données d'images numériques précédentes (Dn-1') desquelles le bruit est éliminé est supérieure à la valeur de référence.

8. Procédé selon la revendication 7, dans lequel on accède à la LUT pour augmenter la gradation des données d'images numériques courantes et pour délivrer le résultat lorsque la différence entre les gradations des données d'images numériques courantes (Dn') desquelles le bruit est éliminé et les données d'images numériques précédentes (Dn-1') desquelles le bruit est éliminé est supérieure à la valeur de référence et lorsque la gradation des données d'images numériques courantes (Dn) est supérieure à la gradation des données d'images numériques précédentes (Dn-1).

9. Procédé selon la revendication 7 ou 8, dans lequel on accède à la LUT pour réduire la gradation des données d'images numériques courantes (Dn) et pour délivrer le résultat lorsque la différence entre les gradations des données d'images numériques courantes (Dn') desquelles le bruit est éliminé et les données d'images numériques précédentes (Dn-1') desquelles le bruit est éliminé est supérieure à la valeur de référence et lorsque la gradation des données d'images numériques courantes (Dn) est inférieure à la gradation des données d'images numériques précédentes (Dn-1).

10. Procédé selon la revendication 7, 8 ou 9, consistant à :
délivrer des premières données d'images courantes (Dn) sur la base de données d'images numériques ;
éliminer un bruit présent dans les premières données d'images courantes (Dn) lors d'une première opération d'élimination du bruit et délivrer des secondes données d'images courantes (Dn') représentatives de celles-ci ;
délivrer des premières données d'images précédentes (Dn-1) précédant les premières données d'images courantes (Dn) ;
éliminer un bruit présent dans les premières données d'images précédentes (Dn-1) lors d'une seconde opération d'élimination du bruit et délivrer des secondes données d'images précédentes (Dn-1') représentatives de celles-ci ;
comparer une gradation des secondes données d'images courantes (Dn') et une gradation des secondes données d'images précédentes (Dn-1') ; et
délivrer les données d'images numériques (Dn") ayant une même vitesse de réponse que les premières données d'images courantes (Dn) lorsqu'une différence entre les gradations des secondes données d'images courantes (Dn') et les secondes données d'images précédentes (Dn-1') est inférieure à une valeur de référence ; et déterminer si la gradation des premières données d'images courantes (Dn) est supérieure à la gradation des premières données d'images précédentes (Dn-1) lorsqu'une différence entre les gradations des secondes données d'images courantes (Dn') et les secondes données d'images précédentes (Dn-1') est supérieure à une valeur de référence.

11. Procédé selon la revendication 10, consistant en outre à :
délivrer les données d'images numériques (Dn") ayant une vitesse de réponse supérieure à celle des premières données d'images numériques courantes (Dn) lorsque la gradation des premières données d'images courantes (Dn) est supérieure à la gradation des premières données d'images précédentes (Dn-1).

12. Procédé selon la revendication 10 ou 11, consistant en outre à :
délivrer les données d'images numériques (Dn") ayant une vitesse de réponse inférieure à celle des premières données d'images numériques courantes lorsque la gradation des premières données d'images courantes (Dn) est inférieure à la gradation des premières données d'images précédentes (Dn-1).
